# EUROPEAN PATENT APPLICATION

(11) **EP 3 473 902 A1**
(43) Date of publication of application: **24.04.2019**
(21) Application number: 17461626.8
(22) Date of filing: 23.10.2017
(51) Int. Cl.: F16K 27/00, B33Y 80/00, B23K 26/342, F15B 13/08

(54) **SERVO VALVE HOUSING**

(71) Applicant: Hamilton Sundstrand Corporation, Charlotte, NC 28217 (US)
(72) Inventor: RESZEWICZ, Modest, 50-238 Wroclaw (PL); CZARNECKI, Pawe, 58-100 Swidnica (PL)
(74) Representative: Dehns

(57) **Abstract**

The present disclosure relates to an additively manufactured servo valve housing (1) comprising an outer shell (2), having an outer wall surface (2a) defining an outer perimeter of the housing (1), and a lattice structure (4) within the outer shell (2).

## Description

### TECHNICAL FIELD

This disclosure relates to a servo valve housing and also a method of manufacturing a servo valve housing.

### BACKGROUND

Servo valves are well-known in the art and can be used to control how much fluid is ported to an actuator. Servo valves include a housing that houses several components in cavities manufactured therein. Such components are well-known in the art, and include, for instance, fluid nozzles, spool valves, flappers, fluid ports etc.

Given the different cavities required in a servo valve housing, traditional manufacturing techniques have included a complex casting process, that is time consuming and expensive.

Moreover, servo valve housings produced by existing methods may be relatively heavy. In many applications, particularly for aerospace applications, providing lower weight servo valve housings is highly desirable. However, the servo valve housing must still be able to cope with the various stress and fatigue properties needed to permit its operation under various conditions and in certain environments.

### SUMMARY

From one aspect, the present disclosure relates to a servo valve housing comprising an outer shell, having an outer wall surface defining an outer perimeter of the housing, and a lattice structure within the outer shell.

In an embodiment of the above aspect, the outer shell includes an inner wall surface, defining an inner perimeter of the outer shell, and the lattice structure extends between different portions of the inner wall surface.

In a further embodiment of the above aspect and embodiment, at least one cavity is defined within the housing by the outer wall surface of the outer shell.

From another aspect, the present disclosure relates to a method of manufacturing a servo valve housing using additive manufacturing.

In an embodiment of the above aspect, the additive manufacturing comprises wire-feed metal deposition.

In a further embodiment of the above aspect and embodiment, the method further comprises depositing successive layers of material one on top of each other to provide an outer shell and a lattice structure within the outer shell. In an additional embodiment, the outer shell may include an inner wall surface, defining an inner perimeter of the outer shell, and the method may further comprise depositing the lattice structure to extend between different portions of the inner wall surface. In an alternative or further additional embodiment, the outer shell may have an outer wall surface defining an outer perimeter of the housing. The method may also further comprise depositing successive layers to form at least one cavity within the housing defined by the outer wall surface of the outer shell.

In a further embodiment of any of the above aspects and embodiments, the outer shell is a solid outer shell layer.

In yet a further embodiment of any of the above aspects and embodiments, the lattice structure has an irregular structure, defining a mixed density within the outer shell. In an additional embodiment, the density of the lattice structure may be greater in an area of the housing determined to experience a relatively higher stress during operation, than in another area of the housing. In an alternative or further additional embodiment, the density of the lattice structure is greater in an area of the housing determined to be relatively more susceptible to stress concentrations and/or fatigue than in another area of the housing. In a further alternative or yet further additional embodiment, the lattice structure may have an irregular structure, comprising more than one different types of lattice structure within the outer shell.

In an alternative embodiment to the above, the lattice structure has a regular structure, defining an approximately uniform density within the outer shell and one type of lattice structure.

In yet a further embodiment of any of the above aspects and embodiments, the thickness of the outer shell varies around the perimeter of the housing.

### BRIEF DESCRIPTION OF DRAWINGS

Some exemplary embodiments of the present disclosure will now be described by way of example only, and with reference to the following drawings in which:
Figure 1 shows an isometric view of part of a servo valve housing in accordance with an embodiment of this disclosure;
Figure 2 shows a simplified above view of Figure 1;
Figure 3a shows a cross-sectional view through line A-A of Figure 2;
Figure 3b shows a cross-sectional view through line B-B of Figure 2;
Figure 4 shows a transparent isometric view of a servo valve housing in accordance with an embodiment of this disclosure.

### DETAILED DESCRIPTION

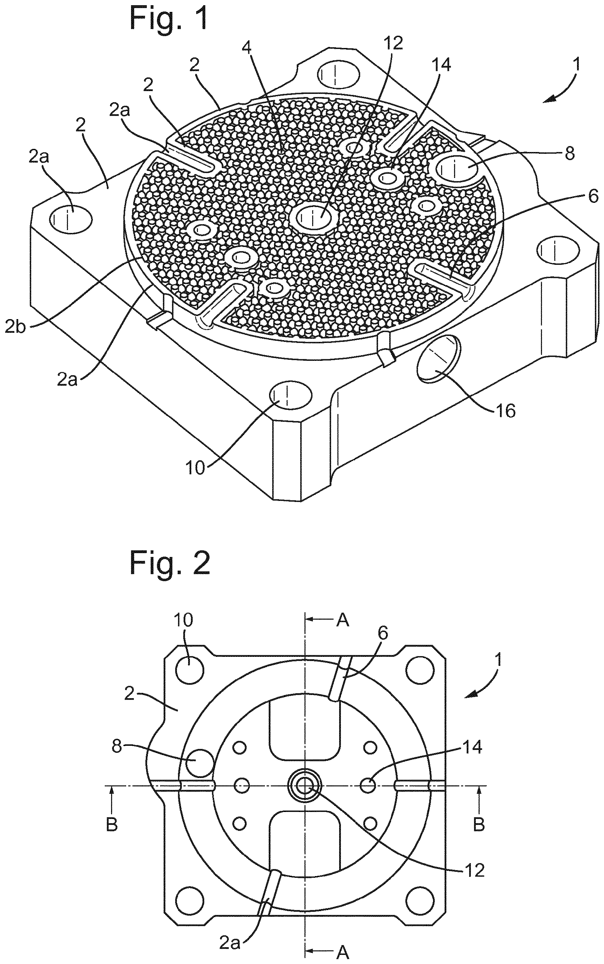

With reference to Figure 1, part of a servo valve housing 1 is illustrated. The housing 1 is shown part way through manufacture. An outer shell 2 has an outer wall surface 2a defining an outer perimeter of the housing and an inner wall surface 2b defining an inner perimeter of the outer shell 2, and enclosing an interior volume of the housing 1. A lattice structure 4 is disposed within the outer shell 2 and extends to fill the inner perimeter defined by the inner wall surface 2b. In this manner, the outer shell 2 forms an external layer of material that surrounds the lattice structure 4.

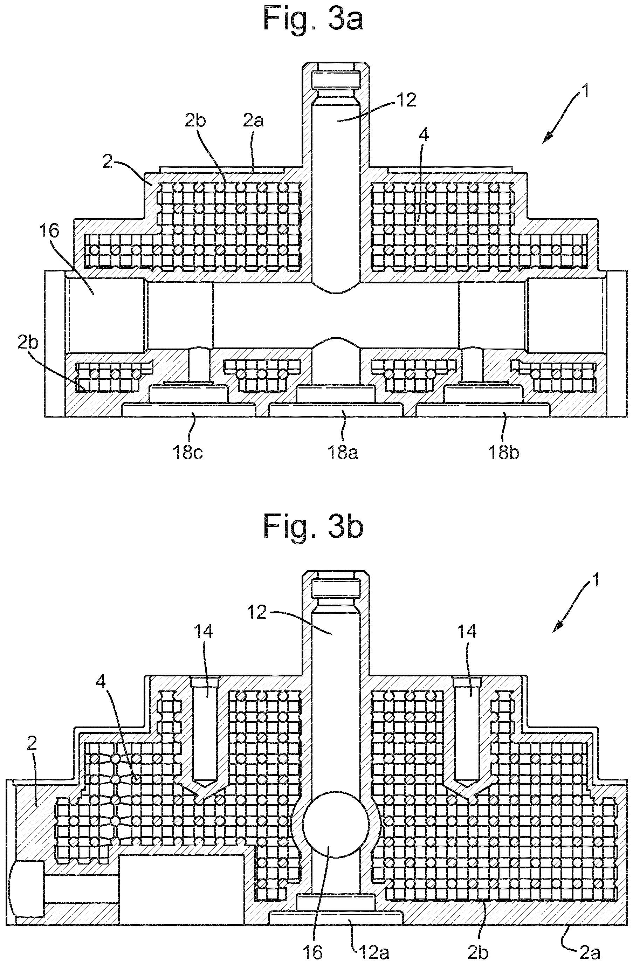

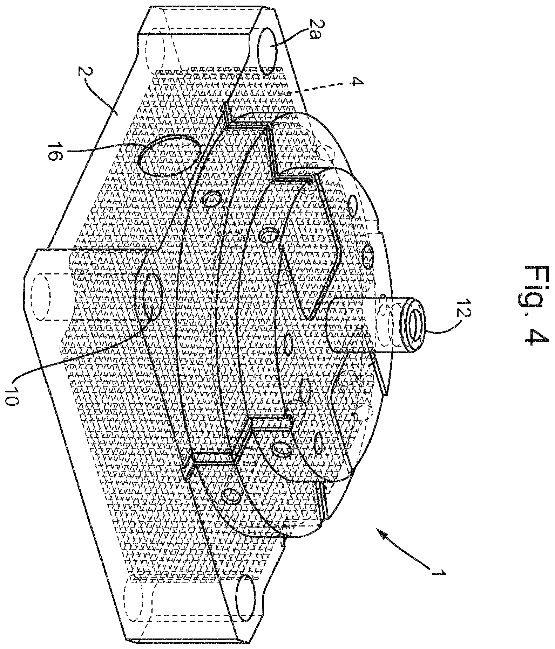

The outer wall surface 2a defines a plurality of cavities located within the housing 1 that are designed to either house different servo valve components or act as ports. The precise arrangement of cavities is not important for understanding this disclosure, and as will be understood by the skilled person, may be different depending on the purpose, positioning and control mechanism of the eventual servo valve. For the sake of example, however, housing 1 has been illustrated in Figures 1 to 4 with fluid supply cavities 6, 8, 12 and 14, mounting apertures 10, a spool valve cavity 16 and fluid control ports 18a-18c. In certain embodiments, the outer shell 2 may hermetically seal the interior volume defined thereby from the exterior of the housing 1.

The lattice structure 4 can be any suitable lattice structure. The lattice structure may comprise a series of nodes interconnected by ligaments, defining a porous construction. The interior volume enclosed by the outer shell 2 where no nodes or ligaments are present is hollow (i.e. void of solid material). In certain embodiments, the volume defined within the outer shell not occupied by the lattice structure 4 may be empty or filled with a gas. In certain embodiments, the lattice structure 4 may be any Bravais lattice structure, such as cubic, triclinic, monoclinic, orthorhombic, tetragonal, hexagonal or rhombohedral. The lattice structure may be regular or irregular. By regular, it is meant that the lattice structure has an approximately uniform density between the inner wall surface 2b and is one type of lattice structure. By irregular, it is meant that the lattice structure 4 has a mixed density between the inner wall surface 2b, and/or may comprise one or more types of lattice structure. The relative density of the lattice structure can be varied by making the unit cell of the lattice structure smaller or larger. For instance, an area of lattice structure 4 with a smaller (tighter spaced) unit cell will provide a denser lattice structure per unit volume than area of lattice structure 4 with a larger (more spaced apart) unit cell.

As will be appreciated by the skilled person, the lattice structure type and density can be varied according to stress and fatigue requirements in certain areas of the servo valve housing. In areas where the servo valve housing is put under a relatively higher stress or is relatively more susceptible to stress concentrations and/or fatigue, a lattice structure type that is stronger and/or a lattice structure having a higher density may be used. As will be appreciated by the skilled person, such areas may be identified by modelling the housing 1 under operating conditions. Such modelling may involve computational fluid dynamics (CFD) and/or finite element analysis (FEA). Thus, in some embodiments, the lattice structure 4 has one density in one location within the housing 1 and a different density in another location within the housing 1. In additional or alternative embodiments, the lattice structure 4 can be one type of lattice structure 4 in one location within the housing 1 and may be a different type of lattice structure 4 in another location within the housing 1.

In the depicted embodiments, the outer shell 2 is a solid outer shell layer, or in other words, a "fully-dense" structure that is non-porous, unlike the lattice structure 4. In this manner, outer shell 2 forms an external layer of "fully-dense" material that surrounds the lattice structure 4. The thickness of the outer shell 2 is defined as the distance between the outer and inner wall surfaces 2a, 2b. The thickness of outer shell 2 may be constant around the perimeter of the housing 1 or may be varied around the perimeter of the housing 1. For instance, the thickness of outer shell 2 may be varied to account for increased stress and fatigue resistance requirements, as discussed above with regard to the lattice structure 4.

The housing 1 may be formed using additive manufacturing. A particularly suitable additive manufacturing technique may be wire feed additive manufacturing, and specifically, wire feed metal deposition. In this process, wire stock of metal is progressively fed through a wire feeder and deposited onto a substrate using a melting device, for example, an electron beam or laser. This allows layers of the housing 1 to be formed on a substrate, until the whole housing 1 has been formed. Such wire feed deposition techniques are well-known in the field of 3D printing, for instance, and need not, therefore, be described in detail here.

The housing 1 can be made of any suitable material that is available as a wire stock for wire feed additive manufacturing, and will be determined by the intended operating environment and conditions of the eventual servo valve. For instance, servo valve housing 1 may comprise an aluminium, steel, titanium or nickel-based alloy. In some embodiments, different alloys may be used in different areas of the servo valve housing 1, according to differing mechanical property requirements.

By using wire feed additive manufacturing it is possible to form the aforementioned outer shell 2 and lattice structure 4, with cavities also defined in the housing 1. Other additive manufacturing techniques, such as powder-based deposition techniques, may not be capable of forming such structures, since powder may become trapped within the housing lattice structure 4, and cannot be removed therefrom. In addition, powder-based deposition techniques may not provide the deposition precision and structural support necessary to achieve an intricate lattice structure 4, such as illustrated. As will be appreciated by the skilled person, traditional casting techniques also fail to provide the precision and structural support necessary to produce a housing 1 with an outer shell 2 and lattice structure 4, such as illustrated. In addition, the casting structure needed to produce such a lattice structure 4 would be prohibitively complex and expensive.

The use of wire feed additive manufacturing allows relatively quick and inexpensive manufacture of the housing 1 compared to prior art techniques. In addition, the formation of the outer shell 2 and lattice structure 4 permits substantial weight savings compared to prior art servo valve housings (for example, if the volume enclosed by the outer shell 2 were a solid, "fully-dense" structure that is non-porous and/or the volume enclosed by the outer shell 2 were filled with the material that defines the outer shell 2), which can be beneficial for certain servo valve applications, particularly those used in aerospace applications. Moreover, existing servo valve housing geometries can be produced, meaning that the disclosed lighter weight servo valve housing can be used as a direct replacement for an existing servo valve housing, without the whole servo valve requiring a redesign.

## Claims

1. A servo valve housing (1) comprising:
an outer shell (2) having an outer wall surface (2a) defining an outer perimeter of the housing (1);
a lattice structure (4) within the outer shell (2).

2. The servo valve housing of claim 1, wherein the outer shell (2) includes an inner wall surface (2b), defining an inner perimeter of the outer shell (2), and the lattice structure (4) extends between different portions of the inner wall surface (2b).

3. The servo valve housing of claim 1 or 2, wherein at least one cavity (6, 8, 10, 12, 14, 16, 18a-18c) is defined within the housing (1) by the outer wall surface (2a) of the outer shell (2).

4. A method of manufacturing a servo valve housing (1) using additive manufacturing.

5. The method of claim 4, wherein the additive manufacturing comprises wire-feed metal deposition.

6. The method of claim 4 or 5, wherein the method further comprises:
depositing successive layers of material one on top of each other to provide an outer shell (2) and a lattice structure (4) within the outer shell (2).

7. The method of claim 6, wherein the outer shell (2) includes an inner wall surface (2b), defining an inner perimeter of the outer shell (2), and the method further comprises:
depositing the lattice structure (4) to extend between different portions of the inner wall surface (2b).

8. The method of claim 6 or 7, wherein the outer shell (2) has an outer wall surface (2a) defining an outer perimeter of the housing (1), and the method further comprises:
depositing successive layers to form at least one cavity (6, 8, 10, 12, 14, 16, 18a-18c) within the housing (1) defined by the outer wall surface (2a) of the outer shell (2).

9. The servo valve housing or method of any of claims 1 to 3 and 6 to 8, wherein the outer shell (2) is a solid outer shell layer.

10. The servo valve housing or method of any of claims 1 to 3 and 6 to 9, wherein the lattice structure (4) has an irregular structure, defining a mixed density within the outer shell (2).

11. The servo valve housing or method of claim 10, wherein the density of the lattice structure (4) is greater in an area of the housing (1) determined to experience a relatively higher stress during operation, than in another area of the housing (1).

12. The servo valve housing or method of claim 10 or 11, wherein the density of the lattice structure (4) is greater in an area of the housing (1) determined to be relatively more susceptible to stress concentrations and/or fatigue than in another area of the housing (1).

13. The servo valve housing or method of any of claims 1 to 3 and 6 to 12, wherein the lattice structure (4) has an irregular structure, comprising more than one different types of lattice structure (4) within the outer shell (2).

14. The servo valve housing or method of any of claims 1 to 3 and 6 to 9, wherein the lattice structure (4) has a regular structure, defining an approximately uniform density within the outer shell (2) and one type of lattice structure (4).

15. The servo valve housing or method of any of claims 1 to 3 and 6 to 14, wherein the thickness of the outer shell (2) varies around the perimeter of the housing (1).
